(19) Europäisches Patentamt
European Patent Office
Office européen des brevets

(11) **EP 4 615 121 A1**

(12) **EUROPEAN PATENT APPLICATION**
published in accordance with Art. 153(4) EPC

(43) Date of publication:
**10.09.2025 Bulletin 2025/37**

(21) Application number: **23886310.4**

(22) Date of filing: **02.11.2023**

(51) International Patent Classification (IPC):
**H04W 72/23** (2023.01)    **H04W 72/04** (2023.01)
**H04W 52/14** (2009.01)    **H04W 52/32** (2009.01)

(52) Cooperative Patent Classification (CPC):
**H04W 52/14; H04W 52/32; H04W 72/04;
H04W 72/23**

(86) International application number:
**PCT/KR2023/017390**

(87) International publication number:
**WO 2024/096615 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022  KR 20220146552
16.02.2023  US 202363446322 P**

(71) Applicant: **LG Electronics Inc.
Yeongdeungpo-gu
Seoul 07336 (KR)**

(72) Inventors:
- **KIM, Jaehyung**
  Seoul 06772 (KR)
- **YANG, Suckchel**
  Seoul 06772 (KR)
- **KIM, Seonwook**
  Seoul 06772 (KR)
- **LEE, Youngdae**
  Seoul 06772 (KR)
- **LEE, Sunghoon**
  Seoul 06772 (KR)

(74) Representative: **Frenkel, Matthias Alexander
Wuesthoff & Wuesthoff
Patentanwälte und Rechtsanwalt PartG mbB
Schweigerstraße 2
81541 München (DE)**

(54) **APPARATUS AND METHOD FOR RECEIVING DOWNLINK DATA IN WIRELESS COMMUNICATION SYSTEM**

(57)    There is provided a method of operating a user equipment (UE) in a wireless communication system. The method includes receiving, from a base station (BS), a master information block (MIB) including configuration information related to a total number of contiguous resource blocks for control resource set (CORESET) #0; receiving, from the base station, a physical downlink control channel (PDCCH) related to system information block 1 (SIB1) through the CORESET #0 including second resource blocks excluding first resource blocks from the resource blocks based on i) the total number of the resource blocks and ii) a channel bandwidth, a puncturing for a specific number of first resource blocks among the resource blocks being assumed; and receiving, from the base station, a physical downlink shared channel (PDSCH) related to the SIB1 via an initial downlink (DL) bandwidth part (BWP) based on the PDCCH. Based on the puncturing for the first resource blocks, the initial DL BWP is defined by a number of the second resource blocks forming the CORESET #0 and a location of the second resource blocks.

[FIG. 5]

**Description**

[Technical Field]

The present disclosure relates to a wireless communication system. More particularly, the present disclosure relates to a device and method for receiving downlink data in a wireless communication system.

[Background Art]

Wireless communication systems are widely deployed to provide various types of communication services, such as voice and data. In general, the wireless communication system is a multiple access system capable of supporting communication with multiple users by sharing available system resources (bandwidth, transmission power, etc.). Examples of the multiple access system include a Code Division Multiple Access (CDMA) system, a Frequency Division Multiple Access (FDMA) system, a Time Division Multiple Access (TDMA) system, an Orthogonal Frequency Division Multiple Access (OFDMA) system, and a Single Carrier Frequency Division Multiple Access (SC-FDMA) system.

[Disclosure]

[Technical Problem]

In order to solve the above-described and other problems, the present disclosure provides a device and method for receiving downlink data in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system comprising receiving, from a base station (BS), a master information block (MIB) including configuration information related to a total number of contiguous resource blocks for control resource set (CORESET) #0; receiving, from the base station, a physical downlink control channel (PDCCH) related to system information block 1 (SIB1) through the CORESET #0 including second resource blocks excluding first resource blocks from the resource blocks based on i) the total number of the resource blocks and ii) a channel bandwidth, a puncturing for a specific number of first resource blocks among the resource blocks being assumed; and receiving, from the base station, a physical downlink shared channel (PDSCH) related to the SIB1 via an initial downlink (DL) bandwidth part (BWP) based on the PDCCH, and based on the puncturing for the first resource blocks, the initial DL BWP is defined by a number of the second resource blocks forming the CORESET #0 and a location of the second resource blocks.

According to various embodiments of the present disclosure, there is provided a method of operating a base station (BS) in a wireless communication system comprising transmitting, to a user equipment (UE), a master information block (MIB) including configuration information related to a total number of contiguous resource blocks for control resource set (CORESET) #0; transmitting, to the UE, a physical downlink control channel (PDCCH) related to system information block 1 (SIB1) through the CORESET #0 including second resource blocks excluding first resource blocks from the resource blocks based on i) the total number of the resource blocks and ii) a channel bandwidth, a puncturing for a specific number of first resource blocks among the resource blocks being performed; and transmitting, to the UE, a physical downlink shared channel (PDSCH) related to the SIB1 via an initial downlink (DL) bandwidth part (BWP) based on the PDCCH, and based on the puncturing for the first resource blocks, the initial DL BWP is defined by a number of the second resource blocks forming the CORESET #0 and a location of the second resource blocks.

According to various embodiments of the present disclosure, there is provided a user equipment (UE) in a wireless communication system, the UE comprising a transceiver, at least one processor, and at least one memory operably connectable to the at least one processor and configured to store instructions performing operations based on being executed by the at least one processor, wherein the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and configured to store instructions performing operations based on being executed by the at least one processor, wherein the operations comprise all steps of a method of operating the base station according to various embodiments of the present disclosure.

According to various embodiments of the present disclosure, there is provided a control device controlling a user equipment (UE) in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the UE according to various embodiments of the present disclosure.

According to various embodiments of the present disclosure, there is provided a control device controlling a base station in a wireless communication system, the control device comprising at least one processor and at least one memory operably connectable to the at least one processor, wherein the at least one memory is configured to store instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a user equipment (UE) according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and the operations comprise all steps of a method of operating a base station according to various embodiments of the present disclosure.

[Advantageous Effects]

In order to solve the above-described and other problems, the present disclosure can provide a device and method for receiving downlink data in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a synchronization signal block (SSB) in a system applicable to the present disclosure.

FIG. 3 illustrates an example of transmission of a synchronization signal block (SSB) in a system applicable to the present disclosure.

FIG. 4 illustrates an example of an initial access procedure in a system applicable to the present disclosure.

FIG. 5 illustrates an example of an initial DL BWP in a system applicable to the present disclosure.

FIG. 6 illustrates an example of an initial DL BWP in a system applicable to the present disclosure.

FIG. 7 illustrates an example of an operation process of a UE in a system applicable to the present disclosure.

FIG. 8 illustrates an example of an operation process of a base station in a system applicable to the present disclosure.

FIG. 9 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

## General Signal Transmission Method in 3GPP

## Physical Channels and General Signal Transmission

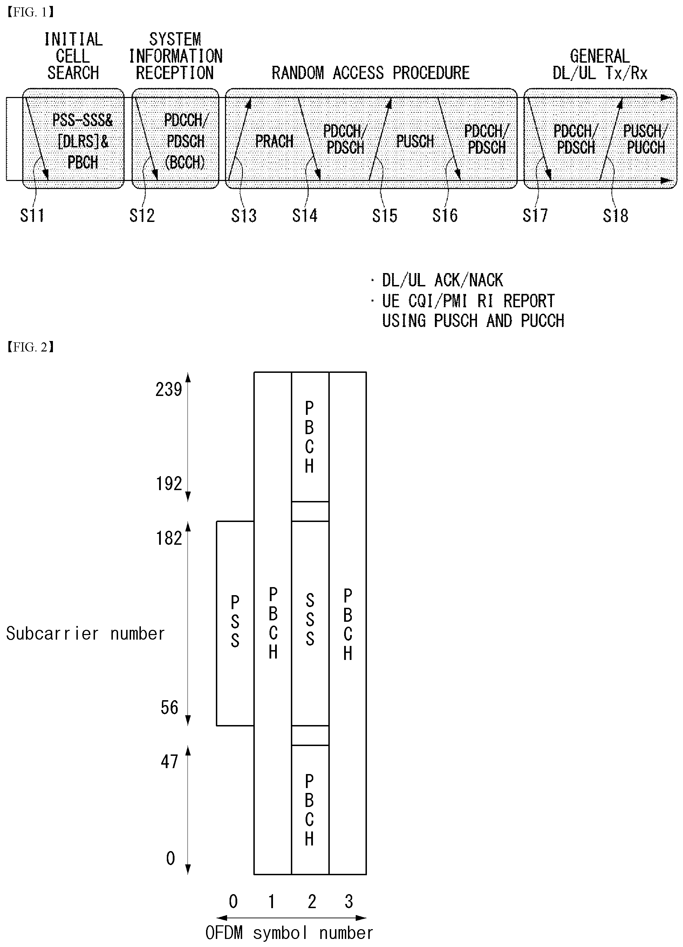

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Initial Access (IA) Procedure

**Synchronization Signal Block (SSB) transmission and related operation**

FIG. 2 illustrates an example of a synchronization signal block (SSB) in a system applicable to the present disclosure.

The UE may perform cell search, system information acquisition, beam alignment for initial access, DL measurement, and the like based on an SSB. The SSB is interchangeably used with a synchronization signal/physical broadcast channel (SS/PBCH) block.

Referring to FIG. 2, the SSB includes a PSS, an SSS and a PBCH. The SSB consists of four consecutive OFDM symbols, and the PSS, the PBCH, the SSS/PBCH or the PBCH is transmitted per OFDM symbol. Each of the PSS and the SSS consists of one OFDM symbol and 127 subcarriers, and the PBCH consists of 3 OFDM symbols and 576 subcarriers. The PBCH is encoded/decoded based on a polar code and is modulated/demodulated according to quadrature phase shift keying (QPSK). The PBCH in the OFDM symbol includes data resource elements (REs), to which a complex modulation value of the PBCH is mapped, and DMRS REs, to which a demodulation reference signal (DMRS) for the PBCH is mapped. There are three DMRS REs per resource block of the OFDM symbol, and there are three data REs between the DMRS REs.

**Cell Search**

The cell search refers to a procedure in which a UE acquires time/frequency synchronization of a cell and detects a cell identifier (ID) (e.g., physical layer cell ID (PCI)) of the cell. The PSS is used to detect a cell ID from a cell ID group, and the SSS is used to detect a cell ID group. The PBCH is used to detect an SSB (time) index and a half-frame.

The cell search procedure of the UE may be summarized as shown in Table 1 below.

[Table 1]

|  | Type of Signals | Operations |
|---|---|---|
| 1st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index (Slot and frame boundary detection) |
| 4th Step | PBCH | * Time information (80 ms, System Frame Number (SFN), SSB index, HF)<br>* Remaining Minimum System Information (RMSI) Control resource set (CORESET)/Search space configuration |
| 5th Step | PDCCH and PDSCH | * Cell access information<br>* RACH configuration |

There are 336 cell ID groups, and there are 3 cell IDs per cell ID group. A total of 1008 cell IDs are present. Information on a cell ID group to which a cell ID of a cell belongs is provided/acquired via the SSS of the cell, and information on the cell ID among 336 cells in the cell ID is provided/acquired via the PSS.

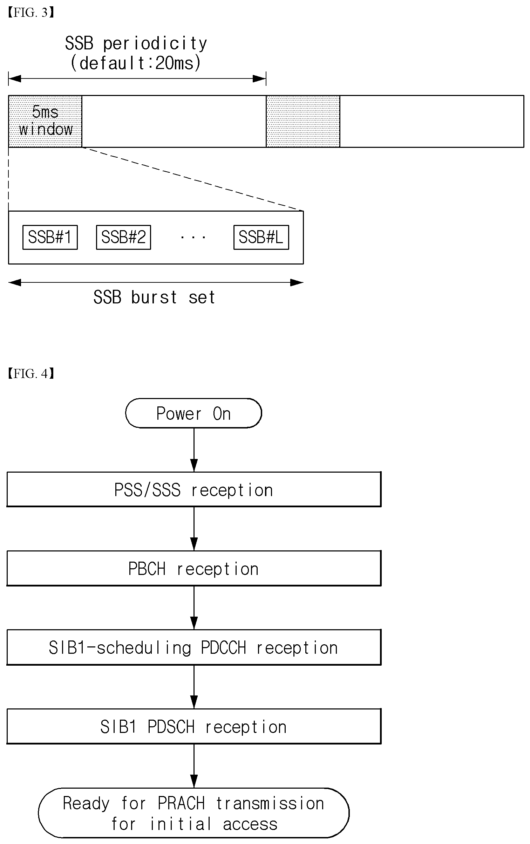

FIG. 3 illustrates an example of transmission of a synchronization signal block (SSB) in a system applicable to the present disclosure.

The SSB is periodically transmitted in accordance with SSB periodicity. A default SSB periodicity assumed by a UE during initial cell search is defined as 20 ms. After cell access, the SSB periodicity may be set to one of {5 ms, 10 ms, 20 ms, 40 ms, 80 ms, 160 ms} by a network (e.g., a BS). An SSB burst set is configured at a beginning part of the SSB periodicity. The SSB burst set includes a 5 ms time window (i.e., half-frame), and the SSB may be transmitted up to N times within the SS burst set. The maximum transmission number L of the SSB may be given as follows according to a frequency band of a carrier. One slot includes up to two SSBs.

- For frequency range up to 3 GHz, L = 4
- For frequency range from 3GHz to 6 GHz, L = 8
- For frequency range from 6 GHz to 52.6 GHz, L = 64

A time position of an SSB candidate in the SS burst set may be defined based on a subscriber spacing. The time position of the SSB candidate is indexed from 0 to L-1 (SSB index) in time order within the SSB burst set (i.e., half-frame).

A plurality of SSBs may be transmitted within a frequency span of a carrier. Physical layer cell identifiers of these SSBs need not be unique, and other SSBs may have other physical layer cell identifiers.

The UE may acquire DL synchronization by detecting the SSB. The UE can identify a structure of the SSB burst set based on the detected SSB (time) index, and thus can detect a symbol/slot/half-frame boundary. The number of the frame/half-frame to which the detected SSB belongs may be identified using system frame number (SFN) information and half-frame indication information.

Specifically, the UE may acquire a 10-bit SFN for a frame to which PBCH belongs from the PBCH. Next, the UE may acquire 1-bit half-frame indication information. For example, if the UE detects a PBCH with a half-frame indication bit set to 0, the UE may determine that the SSB, to which the PBCH belongs, belongs to a first half-frame in the frame, and if the UE detects a PBCH with a half-frame indication bit set to 1, the UE may determine that the SSB, to which the PBCH belongs, belongs to a second half-frame in the frame. Finally, the UE may acquire an SSB index of the SSB, to which the PBCH belongs, based on a DMRS sequence and a PBCH payload carried by the PBCH.

### System Information Acquisition

System information (SI) is divided into a master information block (MIB) and a plurality of system information blocks (SIB). The SI other than the MIB may be referred to as remaining minimum system information (RMSI). The following may be referred to for details.

- The MIB includes information/parameters for monitoring PDCCH scheduling PDSCH carrying system information block 1 (SIB1) and is transmitted by a base station (BS) via PBCH of SSB. For example, a UE may check whether a control resource set (CORESET) for a Type0-PDCCH common search space exists based on the MIB. The Type0-PDCCH common search space is a kind of PDCCH search space and is used to transmit a PDCCH for scheduling an SI message. If there is a Type0-PDCCH common search space, the UE may determine, based on information (e.g., pdcch-ConfigSIB1)) within the MIB, (i) a plurality of contiguous resource blocks and one or more consecutive symbols forming the CORESET, and (ii) a PDCCH occasion (e.g., time domain location for PDCCH reception). If there is no Type0-PDCCH common search space, pdcch-ConfigSIB1 provides information for a frequency location where SSB/SIB1 exists and a frequency range where the SSB/SIB1 does not exist.
- The SIB1 contains information related to availability and scheduling (e.g., transmission periodicity, SI-window size) of the remaining SIBs (hereinafter, referred to as SIBx, where x is an integer of 2 or more). For example, the SIB1 may inform whether the SIBx is periodically broadcasted or whether the SIBx is provided by a request of the UE according to an on-demand scheme. If the SIBx is provided by the on-demand scheme, the SIB1 may include information which the UE requires to perform an SI request. The SIB1 is transmitted via the PDSCH, the PDCCH for scheduling the SIB1 is transmitted through the Type0-PDCCH common search space, and the SIB1 is transmitted via the PDSCH indicated by the PDCCH.
- The SIBx is included in the SI message and is transmitted via the PDSCH. Each SI message is sent within a time window (i.e., SI-window) which periodically occurs.

### Channel Measurement and Rate-matching

Up to L SSBs may be transmitted within an SSB burst set, and the number/location of SSBs which are actually transmitted may vary per BS/cell. The number/location of SSBs which are actually transmitted is used for rate-matching and measurement, and information on the actually transmitted SSBs is provided to a UE.

Technical terms used in the present disclosure

- UE: User Equipment
- SSB: Synchronization Signal Block
- MIB: Master Information Block
- RMSI: Remaining Minimum System Information
- FR1: Frequency Range 1. It refers to a frequency domain less than or equal to 6 GHz (e.g., 450 MHz to 6,000 MHz).
- FR2: Frequency Range 2. It refers to a millimeter wave (mmWave) domain greater than or equal to 24 GHz (e.g., 24,250 MHz to 52,600 MHz).
- BW: Bandwidth
- BWP: Bandwidth Part
- RNTI: Radio Network Temporary Identifier
- CRC: Cyclic Redundancy Check
- SIB: System Information Block

- SIB1: SIB1 for NR devices = RMSI (Remaining Minimum System Information). It broadcasts information, etc. necessary for cell access of an NR UE.
- CORESET (COntrol REsource SET): Time/frequency resource in which an NR UE attempts candidate PDCCH decoding
- CORESET#0: CORESET for Type0-PDCCH CSS set for NR devices (configured in MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. It may be limited when it is generated in a separate TB from SIB1 and is transmitted on a separate PDSCH.
- CORESET#0-R: CORESET#0 for reduced capability NR devices
- Type0-PDCCH-R CSS set: a search space set in which a redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): It refers to SSB that has been deployed on NR sync raster but does not include RMSI scheduling information of a corresponding cell for measurement. But, the SSB can include information informing a location of cell defining SSB.
- SCS: subcarrier spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Redcap device or cell supporting only service.
- SIB1(-R)-PDSCH: PDSCH transmitting SIB1(-R)
- SIB1(-R)-DCI: DCI scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RACH Occasion (RO) for normal UE 4-step RACH and 2-step RACH (if configured)
- RO-N1, RO-N2: If a separate RO for normal UE 2-step RACH is configured, it is distinguished into RO-N1(4-step) and RO-N2(2-step).
- RO-R: RACH Occasion (RO) configured for redcap UE 4-step RACH and 2-step RACH (if configured) separately from RO-N
- RO-R1, RO-R2: If a separate RO for redcap UE 2-step RACH is configured, it is distinguished into RO-R1(4-step) and RO-R2(2-step).
- PG-R: MsgA-Preambles Group for redcap UEs
- RAR: Randoma Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband
- TO: Traffic Offloading
- mMTC; massive Machine Type Communications
- eMBB: enhanced Mobile Broadband Communication
- URLLC: Ultra-Reliable and Low Latency Communication
- RedCap: Reduced Capability
- eRedCap: enhanced RedCap
- FDD: Frequency Division Duplex
- HD-FDD: Half-Duplex-FDD
- DRX: Discontinuous Reception

- RRC: Radio Resource Control
- RRM: Radio Resource Management
- IWSN: Industrial Wireless Sensor Network
- LPWA: Low Power Wide Area
- RB: Resource Block
- CCE: Control Channel Element
- AL: Aggregation Level
- PRG: Physical Resource-block Group
- DFT-s-OFDM: DFT-spread OFDM
- PBCH: Physical Broadcast Channel
- A-PBCH: Additional PBCH
- BD: blind detection
- EPRE: Energy Per RE
- SNR: Signal-to-Noise Ratio
- TDM: Time Division Multiplexing - DMRS: DeModulation Reference Signal
- TDD: Time Division Duplex
- PCI: Physical layer Cell ID

## Proposed method of the present disclosure

In the present disclosure, '()' can be interpreted as both when excluding content in parentheses and when including content in parentheses.

In the present disclosure, '/' can be interpreted as when including all the contents separated by '/' (and), or when including only a part of the separated contents.

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases. Features such as enhanced low latency, high reliability, massive connection, etc. of the 5G wireless communication system can be applied to use cases (hereinafter, NB use cases) that have been previously supported in narrowband (NB), as follows.

[Examples of narrowband based use cases (NB use cases)]

1) Railway mobile communication
2) Utility/infrastructure network
3) Mobile communication for public safety

These NB use cases have been previously supported at a bandwidth of about 3 MHz in a frequency band of less than 1 GHz using the previous generation wireless communication system. In the same manner, when the 5G wireless communication system intends to support the NB use cases, the NB use cases may be supported, for example, at the similar frequency bandwidth (about 3 MHz and below 5 MHz) in the same frequency band (below 1 GHz). However, since a minimum channel BW supported by the current 5G NR standard is 5 MHz, a channel bandwidth of less than 5 MHz shall first be supported.

[Example of 5G NR frequency band for supporting NB use cases (3GPP TS38.101-1)]

The following Table 2 corresponds to Table 5.2-1: NR operating bands in FR1 of 3GPP TS38.101-1.

[Table 2]

| NR operating band | Uplink (UL) *operating band* BS receive / UE transmit $F_{UL\_low} - F_{UL\_high}$ | Downlink (DL) *operating band* BS transmit / UE receive $F_{DL\_low} - F_{DL\_high}$ | Duplex Mode |
|---|---|---|---|
| n8 | 880 MHz - 915 MHz | 925 MHz - 960 MHz | FDD |
| n26 | 814 MHz - 849 MHz | 859 MHz - 894 MHz | FDD |

(continued)

| NR operating band | Uplink (UL) *operating band* BS receive / UE transmit $F_{UL\_low}$ - $F_{UL\_high}$ | Downlink (DL) *operating band* BS transmit / UE receive $F_{DL\_low}$ - $F_{DL\_high}$ | Duplex Mode |
|---|---|---|---|
| n28 | 703 MHz - 748 MHz | 758 MHz - 803 MHz | FDD |
| n100 | 874.4 MHz - 880 MHz | 919.4 MHz - 925 MHz | FDD |

[Example of definition of channel BW less than 5 MHz for supporting NB use cases]

Table 3 shows an example of the maximum number of configurable RBs ($N_{RB}$) for each UE channel BW. Specifically, Table 3 shows an example of defining 3 MHz UE channel BW and the maximum number of configurable RBs ($N_{RB}$) (to 15) for the 3 MHz UE channel BW in order to support the NB use cases based on 5G NR, and representing a resource utilization ratio (or RU) (%). Table 3 shows an example of supporting the UE channel BW less than 5 MHz for supporting the NB use cases.

[Table 3]

| UE channel BW | 3 MHz | 5 MHz | 10 MHz | 15 MHz | 20 MHz | 25 MHz | 30 MHz | 40 MHz | 50 MHz |
|---|---|---|---|---|---|---|---|---|---|
| $N_{RB}$ | 15 | 25 | 52 | 79 | 106 | 133 | 160 | 216 | 270 |
| RU (%) | 0.9 | 0.9 | 0.936 | 0.948 | 0.954 | 0.958 | 0.96 | 0.972 | 0.972 |

For newly defined 3 MHz UE channel BW, considering interference between contiguous channels and the resource utilization ratio, another value of $N_{RB}$ can be defined and used as shown in Table 4 or Table 5. Table 4 and Table 5 show an example of supporting the UE channel BW less than 5 MHz for supporting the NB use cases.

[Table 4]

| UE channel BW | 3 MHz | | | |
|---|---|---|---|---|
| $N_{RB}$ | 12 | 13 | 14 | 15 |
| RU (%) | 0.72 | 0.78 | 0.84 | 0.9 |

[Table 5]

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| 15 | 12 | 13 | 14 | 15 | 16 |
| RU (%) | 0.72 | 0.78 | 0.84 | 0.9 | 0.96 |

The UE channel BW/$N_{RB}$ may apply the same value for both DL and UL, or the UE channel BW/$N_{RB}$ may be supported separately for DL and UL. In the latter case, for example, it may be desirable to additionally apply a DFT precoding applicable value only to UL while supporting a maximum value of $N_{RB}$ in both DL and UL considering interference between contiguous channels and the resource utilization ratio.

FIG. 4 illustrates an example of an initial access procedure in a system applicable to the present disclosure. More specifically, FIG. 4 illustrates an example of the DL signal/channel reception order in the initial access procedure.

The 5G NR UE may receive DL signals/channels in the order of FIG. 4 in the initial access procedure.

The initial access procedure was described above in detail. The existing NR UE may receive CORESET#0 information through an MIB transmitted on a PBCH and receive initial DL signals/channels through CORESET#0 frequency band in the initial access procedure. However, when the NR UE operates in a narrowband, the existing method may be inefficient considering the channel BWs shown in Tables 3, 4 and 5 and supportable CORESET#0 bandwidth in the NR standard.

The present disclosure proposes the following methods for supporting transmission/reception of DL signal/-channel in a narrowband.

In the present disclosure, narrowband and NB can be interpreted/applied interchangeably. Further, channel BW,

$N_{RB}$, and maximum transmission BW can be interpreted/applied interchangeably.

In the present disclosure, broadcast signaling includes system information including SIB1, MIB, PBCH payload generated in PHY layer in addition to the MIB, and a signaling method using PBCH scrambling sequence and PBCH DMRS sequence initialization information.

## PDCCH Reception Method

In order to receive SIB1-PDCCH in a narrowband, a UE may receive information for CORESET#0 and Type0-PDCCH CSS set through MIB transmitted on PBCH. Since CORESET#0 bandwidth supported in the current NR standard is 24 PRBs (4.32 MHz) based on 15 kHz SCS, it may exceed narrowband channel BWs shown in Tables 3 to 5. In this instance, a base station may RE-map PDCCH transmission REs to CORESET #0 and then transmit only the REs falling within the channel BW. That is, the base station may puncture the PDCCH transmission REs exceeding the channel BW and transmit the remaining REs.

The UE may assume the above BS operation (i.e., puncturing operation) and receive the PDCCH transmission REs within the channel BW. That is, according to NR standard, the UE may assume that not all the PDCCH transmission REs RE-mapped to CORESET#0 bandwidth but only some PDCCH transmission REs falling within the channel BW are transmitted, and may receive them. Hence, there may occur a loss of PDCCH reception coverage.

In order to recover the loss of the PDCCH reception coverage or expand the PDCCH reception coverage, the base station may apply power boosting to PDCCH transmitted to CORESET#0. Whether to apply the power boosting to the PDCCH transmitted to CORESET#0 may be determined or value(s) of the power boosting may be differently set based on CORESET#0 BW, or channel BW, or a relationship between the two. The value(s) of the power boosting may be pre-defined in the standard (per CORESET#0 BW) or may be broadcast signaled.

According to the existing NR standard TS38.213, as below, when the UE monitors PDCCH transmitting DCI format 1_0 with CRC scrambled by SI-RNTI, P-RNTI, RA-RNTI, etc. through CORESET#0, a ratio of PDCCH DMRS EPRE to SSS EPRE is configured to have a value between -8 dB and 8 dB. If the PDCCH is power boosted and transmitted, a value of the power boosting may be limited so that the PDCCH DMRS EPRE satisfies the above condition when the power boosting has been performed. Alternatively, if the power boosting is applied/configured, the ratio of PDCCH DMRS EPRE to SSS EPRE may be stipulated to have a value between (-8 + power boosting value) dB and (8 + power boosting value) dB.

[Part of NR standard 3GPP TS38.213]

... If the UE has not been provided dedicated higher layer parameters, the UE may assume that the ratio of PDCCH DMRS EPRE to SSS EPRE is within -8 dB and 8 dB when the UE monitors PDCCHs for a DCI format 1_0 with CRC scrambled by SI-RNTI, P-RNTI, or RA-RNTI, or for a DCI format 2_7. ···

Alternatively, new CORESET#0 configuration may be added for narrowband transmission. For example, even if a bandwidth of CORESET#0 added/introduced for narrowband transmission is less than or greater than the channel BW, the bandwidth of CORESET#0 may be less than the existing CORESET#0 bandwidth. For example, the following CORESET#0 configurations may be added.

(1) CORESET#0 size = 12 PRBs

(1-1) In this case, 12 REGs per OFDM symbols * 2 OFDM symbols = 24 REGs = 4 CCE AL can be supported using 2 OFDM symbols.
(1-2) Or, 12 REGs per OFDM symbols * 3 OFDM symbols = 36 REGs = 6 CCE AL can be supported using 3 OFDM symbols.

(2) CORESET#0 size = 14 PRBs

(2-1) In this case, 14 REGs per OFDM symbols * 3 OFDM symbols = 42 REGs = 7 CCE AL can be supported using 3 OFDM symbols.

(3) CORESET#0 size = 15 PRBs

(3-1) In this case, 15 REGs per OFDM symbols * 3 OFDM symbols = 45 REGs = 7.5 CCE AL can be supported using 3 OFDM symbols.

(4) CORESET#0 size = 16 PRBs

(4-1) In this case, 16 REGs per OFDM symbols * 3 OFDM symbols = 48 REGs = 8 CCE AL can be supported using 3 OFDM symbols.

If CORESET#0 size = 16 PRBs as above, when the channel BW is less than 16, the base station may perform PDCCH RE mapping based on CORESET#0 size = 16 PRBs and then puncture a portion exceeding the channel BW to transmit the portion. The puncturing may be performed on highest PRB index(es) or lowest PRB index(es) of CORESET#0 band. The above puncturing method may be predefined in standard or broadcast signalled.

**Initial DL BWP**

As illustrated in FIG. 4, the UE receives the PBCH and then receives DL channel/signal through an initial DL BWP. In a narrowband wireless communication system, the initial DL BWP may be determined based on the following methods.

**Determining/Using CORESET#0 BW as Initial DL BWP**

According to the existing NR standard, even in a narrowband wireless communication system, a UE may receive DL channel/signal through CORESET#0 BW until before a separate initial DL BWP is configured or during an initial access procedure. Alternatively, the UE may assume the CORESET#0 BW as an initial DL BWP and perform an operation in the initial DL BWP, until before a separate initial DL BWP is configured or during an initial access procedure.

[Example]

(1) To support a method of determining/using CORESET#0 BW as an initial DL BWP in a narrowband wireless communication system, for example, CORESET#0 with 12-PRB bandwidth may be supported. In this case, both the CORESET#0 BW and a BW of the initial DL BWP become 12 PRBs, and 2 OFDM symbols may configure CORESET#0 to support up to 4 CCE AL, or 3 OFDM symbols may configure CORESET#0 to newly support/introduce 6 CCE AL.
(2) Or, the COREST#0 BW may be configured to have a relationship of the following (2-1).
(2-1) CORESET#0 BW = BW of initial DL BWP = channel BW
(3) For another example, if a channel BW is 15 PRBs, the CORESET#0 BW may be set to 15 PRBs in the same manner, and 2 OFDM symbols may configure CORESET#0 to support 4 CCE AL, or 3 OFDM symbols may configure CORESET#0 to support 7 CCE AL, or 4 OFDM symbols may configure CORESET#0 to support 10 CCE AL. This method may be aimed to use the CORESET#0 BW as widely as possible considering the initial DL BWP.

[SIB1 Transmission Method]

In this instance, SIB1 PDSCH may be scheduled within the initial DL BWP, i.e., CORESET#0 BW.

[Initial DL BWP Configuration Method]

The initial DL BWP is determined by CORESET#0 related configuration. CORESET#0 related configuration parameter(s) may be set through MIB transmitted on PBCH. For example, as specified in NR standard TS38.213, a BW of CORESET#0 and the number of OFDM symbols may be set by *controlResourceSetZero* in *pdech-ConfigSIB1* included in the MIB.

**Method of determining/configuring initial DL BWP separately/independently from CORESET#0 BW**

Alternatively, for a narrowband wireless communication system, a separate initial DL BWP may be determined/configured separately/independently from CORESET#0. A BW of an initial DL BWP configured separately/independently from CORESET#0 BW may be determined/configured to have the following relationship with the CORESET#0 BW.

[Method #1] Method of configuring BW of initial DL BWP to be greater than CORESET#0 BW

A BW of an initial DL BWP may be configured to be greater than CORESET#0 BW. In this instance, the initial DL BWP may be configured to include CORESET#0 band. For example, in a narrowband, if a channel BW is 14 PRBs, or is set like this, the CORESET#0 BW may be set to 12 PRBs so that the CORESET#0 BW falls within the channel BW, and the initial DL BWP may be set to 14 PRBs in the same manner as the channel BW.

In the Method #1, DL channels/signals transmitted on the initial DL BWP including the SIB1 PDSCH may be scheduled within the initial DL BWP, and thus a FDRA field of DCI scheduling PDSCHs transmitted on the initial DL BWP may be determined based on the BW of the initial DL BWP (14 PRBs in the above example). That is, $N_{\mathrm{RB}}^{\mathrm{DL,BWP}}$ defined in NR standard TS38.212 may be the BW of the initial DL BWP not CORESET#0 size. Alternatively, if the entire channel BW is used as the initial DL BWP, $N_{\mathrm{RB}}^{\mathrm{DL,BWP}}$ may be the channel BW.

[Method #2] Method of configuring BW of initial DL BWP to be less than CORESET#0 BW

A BW of an initial DL BWP may be configured to be less than CORESET#0 BW. In this instance, the initial DL BWP may be configured to include a part of CORESET#0 band. For example, in a narrowband, if a channel BW is 12 PRBs, or is set like this, the CORESET#0 BW may be set to 24 PRBs, and the initial DL BWP may be determined/configured as lowest or highest 12 PRBs of CORESET#0.

This method may be used to support the case of reusing CORESET#0 supported in the existing NR standard in a narrowband wireless communication system.

In the Method #2, DL channels/signals transmitted on the initial DL BWP including SIB1 PDSCH may be scheduled within the initial DL BWP, and thus a FDRA field of DCI scheduling PDSCHs transmitted on the initial DL BWP may be determined based on the BW of the initial DL BWP (12 PRBs in the above example). That is, $N_{\mathrm{RB}}^{\mathrm{DL,BWP}}$ defined in NR standard TS38.212 may be the BW of the initial DL BWP not CORESET#0 size. Alternatively, if the entire channel BW is used as the initial DL BWP, $N_{\mathrm{RB}}^{\mathrm{DL,BWP}}$ may be the channel BW.

Alternatively, in the Method #2, DL channels/signals transmitted on the initial DL BWP including SIB1 PDSCH may be scheduled within the CORESET#0 BW. In this instance, a FDRA field of DCI scheduling PDSCHs transmitted on the initial DL BWP may be determined based on the CORESET#0 BW (24 PRBs in the above example) as prescribed in the existing NR standard.

[Method #3] Method of configuring BW of initial DL BWP to be the same as CORESET#0 BW

A BW of an initial DL BWP may be configured to be the same as CORESET#0 BW. This method is the same as the method of determining/using the CORESET#0 BW as the initial DL BWP described above. In the Method #3, separate signaling for the initial DL BWP may not be necessary. Alternatively, if there is no separate signaling, it may be assumed that initial DL BWP = CORESET#0 BW.

[Method #4] Method of configuring initial DL BWP to include part of CORESET#0

An initial DL BWP may be configured to include a part of CORESET#0 BW. For example, if SSB and CORESET#0 cannot be received both or simultaneously within a channel BW, a base station may configure all SSBs or only PSS/SSS among the SSBs to be included in the channel BW, and only a part of the CORESET#0 to be included in the channel BW regardless of a size of the CORESET#0. In this instance, if the initial DL BWP is configured to be included in the channel BW, configuration described in the Method #4 may be expected. The Method #4 may be used for the purpose of reusing CORESET#0 configuration supported in the existing NR standard. In this instance, because the base station/UE may not be able to transmit/receive all PDCCHs, a loss of PDCCH reception coverage may occur.

The Method #4 may include the initial DL BWP being defined as a maximum transmission BW. In this case, the UE may assume the maximum transmission BW as the initial DL BWP in the initial access procedure. The definition/assumption may be applied only in narrowband or only when the CORESET#0 BW exceeds the channel BW in narrowband.

The Method #4 may also include the initial DL BWP being defined as a PBCH BW. In this case, the UE may assume the PBCH BW as the initial DL BWP in the initial access procedure. The definition/assumption may be applied only in narrowband or only when the CORESET#0 BW exceeds the channel BW in narrowband. If the maximum transmission BW is less than the PBCH BW, the UE may transmit only a subset of PBCH transmission RBs within the maximum transmission BW. In this case, the PBCH BW assumed by the UE as the initial DL BWP may be a PBCH BW "used for actual PBCH transmission." That is, if the subset of PBCH transmission RBs is punctured and transmitted, the UE may assume the PBCH BW "used for actual PBCH transmission after being punctured" or the "punctured" PBCH BW in the same sense as the initial DL BWP. This may be for the purpose of removing a UE complexity problem or an impact on reception coverage that may occur due to puncturing, partial reception, etc. within the initial DL BWP assumed by the UE in this situation.

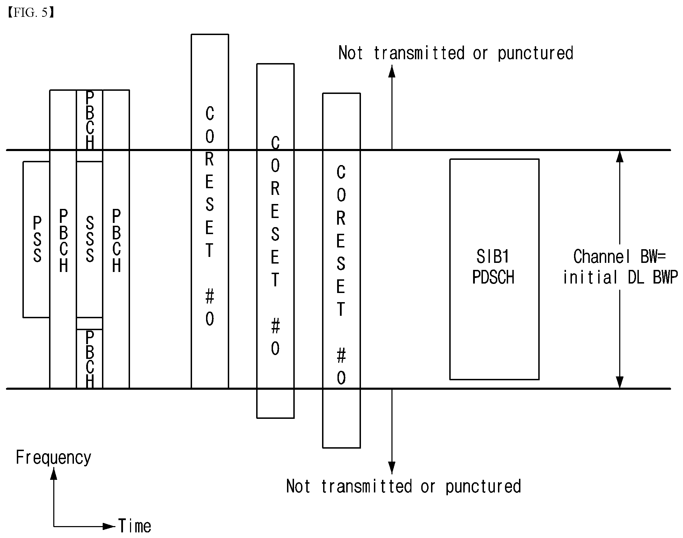

FIG. 5 illustrates an example of an initial DL BWP in a system applicable to the present disclosure.

FIG. 5 illustrates an example where assuming channel BW = 16 PRBs and CORESET#0 BW = 24 PRBs, the base station/UE defines/assumes an initial DL BWP as a (punctured) PBCH BW. FIG. 5 illustrates an example of the initial DL BWP proposed in the Method #4.

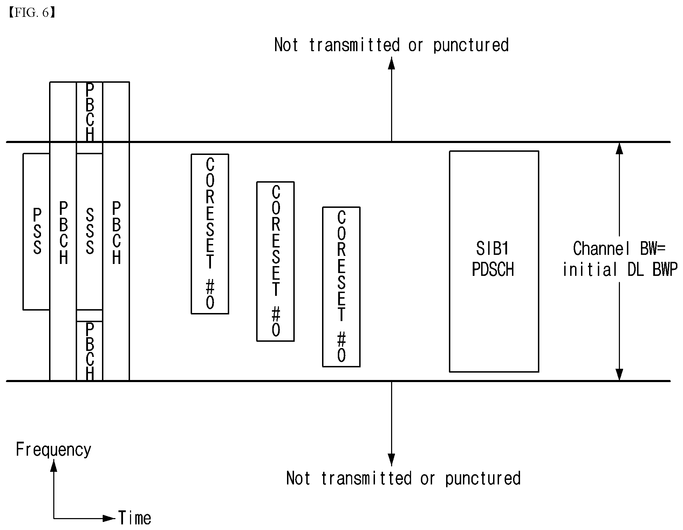

FIG. 6 illustrates an example of an initial DL BWP in a system applicable to the present disclosure.

The Method #4 may be applied to secure DL transmission resources through the initial DL BWP when CORESET#0 BW is excessively less than the channel BW, for example, when the channel BW has been set to 16 RBs, but the CORESET#0 BW is 12 RBs, or a part of the CORESET#0 BW is included in the channel BW and the CORESET#0 BW included in the channel BW is less than a specific value (e.g., 12 or less RBs). FIG. 6 illustrates an example where assuming channel BW = 16 PRBs and CORESET#0 BW = 12 PRBs, the base station/UE defines/assumes an initial DL BWP as a (punctured) PBCH BW.

[Method of configuring separately/independently Initial DL BWP]

If an initial DL BWP is configured separately/independently from CORESET#0 BW, the initial DL BWP may be configured by broadcast signaling.

Alternatively, a frequency location of the initial DL BWP may be determined, based on a frequency location of SSB/PSS/SSS/CORESET#0, as a relative frequency location to this/offset value, and this value may be predefined in NR standard or broadcasted. A bandwidth of the initial DL BWP may be predefined in NR standard or broadcasted. Alternatively, the bandwidth of the initial DL BWP may be predefined in NR standard to have the same value as the channel BW. Alternatively, if there is no separate signaling in a broadcast signaling step, the base station/UE may assume that the BW of the initial DL BWP is the same as the channel BW. This determination/configuration method can be expected to have the effect of minimizing signaling overhead when the entire narrowband is used as the initial DL BWP.

**[Description of claims related to UE]**

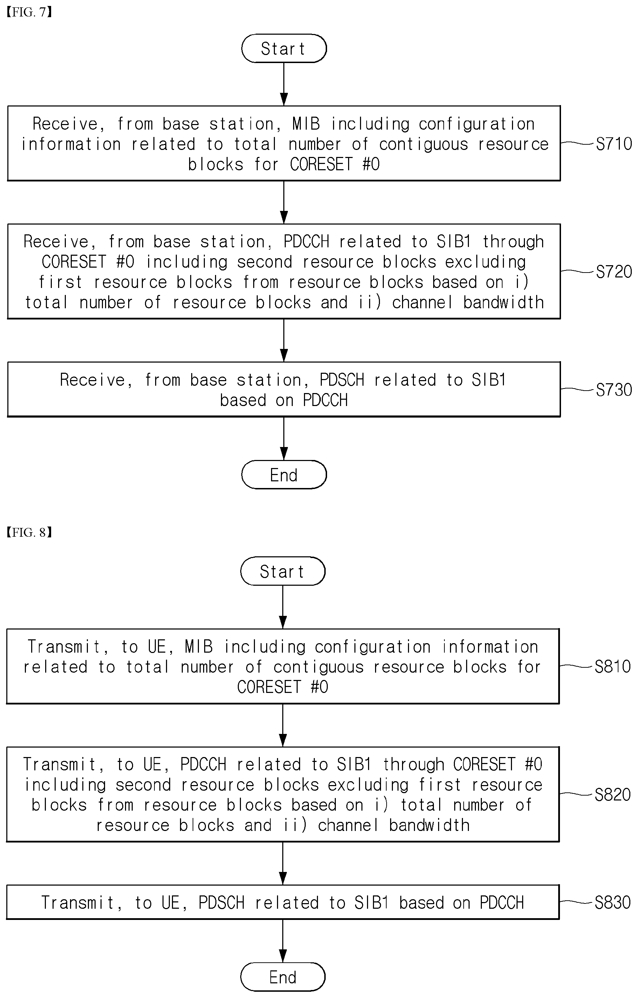

Below, the above-described embodiments are described in detail from a perspective of an operation of a UE with reference to FIG. 7. Methods to be described below are merely distinguished for convenience of explanation. Thus, as long as the methods are not mutually exclusive, it is obvious that partial configuration of any method can be substituted or combined with partial configuration of another method.

FIG. 7 illustrates an example of an operation process of a UE in a system applicable to the present disclosure.

In step S710, a UE receives, from a base station (BS), a master information block (MIB) including configuration information related to a total number of contiguous resource blocks for control resource set (CORESET) #0.

In step S720, the UE receives, from the base station, a physical downlink control channel (PDCCH) related to system information block 1 (SIB1) through the CORESET #0 including second resource blocks excluding first resource blocks from the resource blocks based on i) the total number of the resource blocks and ii) a channel bandwidth. A puncturing for a specific number of first resource blocks among the resource blocks is assumed.

In step S730, the UE receives, from the base station, a physical downlink shared channel (PDSCH) related to the SIB1 via an initial downlink (DL) bandwidth part (BWP) based on the PDCCH.

Based on the puncturing for the first resource blocks, the initial DL BWP is defined by a number of the second resource blocks forming the CORESET #0 and a location of the second resource blocks.

According to various embodiments of the present disclosure, if a bandwidth based on the number of the resource blocks exceeds the channel bandwidth, the PDCCH may be received through the second resource blocks related to a bandwidth less than the channel bandwidth.

According to various embodiments of the present disclosure, the first resource blocks may be the specific number of resource blocks with a highest resource block index among the resource blocks.

According to various embodiments of the present disclosure, the total number of the resource blocks may be 24, and the channel bandwidth may be 3 MHz or 5 MHz.

According to various embodiments of the present disclosure, if the total number of the resource blocks is 24 and the channel bandwidth is 3 MHz, the number of the second resource blocks may be 15.

According to various embodiments of the present disclosure, the initial DL BWP may be defined by a location and a number of contiguous resource blocks starting from a resource block with a lowest index among the second resource blocks forming the CORESET #0 and ending with a resource block with a highest index among the second resource blocks.

According to various embodiments of the present disclosure, the CORESET #0 may be related to Type0-PDCCH common search space (CSS) set.

According to various embodiments of the present disclosure, there is provided a user equipment (UE) in a wireless communication system. The UE may include a transceiver and at least one processor, and the at least one processor may be configured to perform the operation method of the UE based on FIG. 7.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 7 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 7.

## [Description of claims related to BS]

Below, the above-described embodiments are described in detail from a perspective of an operation of a base station with reference to FIG. 8. Methods to be described below are merely distinguished for convenience of explanation. Thus, as long as the methods are not mutually exclusive, it is obvious that partial configuration of any method can be substituted or combined with partial configuration of another method.

FIG. 8 illustrates an example of an operation process of a base station in a system applicable to the present disclosure.

In step S810, a base station transmits, to a UE, a master information block (MIB) including configuration information related to a total number of contiguous resource blocks for control resource set (CORESET) #0.

In step S820, the base station transmits, to the UE, a physical downlink control channel (PDCCH) related to system information block 1 (SIB1) through the CORESET #0 including second resource blocks excluding first resource blocks from the resource blocks based on i) the total number of the resource blocks and ii) a channel bandwidth. A puncturing for a specific number of first resource blocks among the resource blocks is performed.

In step S830, the base station transmits, to the UE, a physical downlink shared channel (PDSCH) related to the SIB1 via an initial downlink (DL) bandwidth part (BWP) based on the PDCCH. Based on the puncturing for the first resource blocks, the initial DL BWP is defined by a number of the second resource blocks forming the CORESET #0 and a location of the second resource blocks.

According to various embodiments of the present disclosure, if a bandwidth based on the number of the resource blocks exceeds the channel bandwidth, the PDCCH may be transmitted through the second resource blocks related to a bandwidth less than the channel bandwidth.

According to various embodiments of the present disclosure, the first resource blocks may be the specific number of resource blocks with a highest resource block index among the resource blocks.

According to various embodiments of the present disclosure, the total number of the resource blocks may be 24, and the channel bandwidth may be 3 MHz or 5 MHz.

According to various embodiments of the present disclosure, if the total number of the resource blocks is 24 and the channel bandwidth is 3 MHz, the number of the second resource blocks may be 15.

According to various embodiments of the present disclosure, the initial DL BWP may be defined by a location and a number of contiguous resource blocks starting from a resource block with a lowest index among the second resource blocks forming the CORESET #0 and ending with a resource block with a highest index among the second resource blocks.

According to various embodiments of the present disclosure, the CORESET #0 may be related to Type0-PDCCH common search space (CSS) set.

According to various embodiments of the present disclosure, there is provided a base station in a wireless communication system. The base station may include a transceiver and at least one processor, and the at least one processor may be configured to perform the operation method of the BS based on FIG. 8.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 8 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 8.

## Wireless device applicable to the present disclosure

Examples of wireless devices to which various embodiments of the present disclosure are applied are described below.

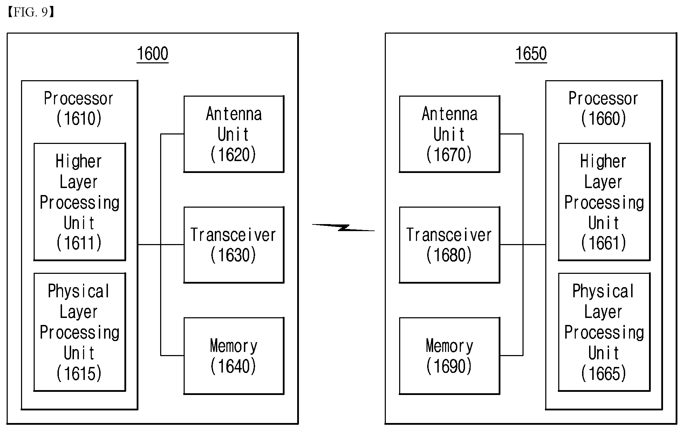

FIG. 9 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink receive (Rx) signal processing, downlink transmit (Tx) signal processing, and the like. For example, if the first device 1600 is a first UE device in inter-UE communication, the physical layer processing unit 1615 may performs downlink Rx signal processing, uplink Tx signal processing, sidelink Tx signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink receive (Rx) signal processing, uplink Tx signal processing, and the like. For example, if the second device 1650 is a second UE device in inter-UE communication, the physical layer processing unit 1665 may perform downlink Rx signal processing, uplink Tx signal processing, sidelink Rx signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

The wireless communication technology implemented in the devices 1600 and 1650 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 1600 and 1650 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 1600 and 1650 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1. A method of operating a user equipment (UE) in a wireless communication system, the method comprising:

   receiving, from a base station (BS), a master information block (MIB) including configuration information related to a total number of contiguous resource blocks for control resource set (CORESET) #0;
   receiving, from the base station, a physical downlink control channel (PDCCH) related to system information block 1 (SIB1) through the CORESET #0 including second resource blocks excluding first resource blocks from the resource blocks based on i) the total number of the resource blocks and ii) a channel bandwidth,
   wherein a puncturing for a specific number of first resource blocks among the resource blocks is assumed; and
   receiving, from the base station, a physical downlink shared channel (PDSCH) related to the SIB1 via an initial downlink (DL) bandwidth part (BWP) based on the PDCCH,
   wherein based on the puncturing for the first resource blocks, the initial DL BWP is defined by a number of the second resource blocks forming the CORESET #0 and a location of the second resource blocks.

2. The method of claim 1, wherein based on a bandwidth based on the number of the resource blocks exceeding the channel bandwidth, the PDCCH is received through the second resource blocks related to a bandwidth less than the channel bandwidth.

3. The method of claim 1, wherein the first resource blocks are the specific number of resource blocks with a highest resource block index among the resource blocks.

4. The method of claim 1, wherein the total number of the resource blocks is 24, and
   wherein the channel bandwidth is 3 MHz or 5 MHz

5. The method of claim 4, wherein based on the total number of the resource blocks being 24 and the channel bandwidth being 3 MHz, the number of the second resource blocks is 15.

6. The method of claim 1, wherein the initial DL BWP is defined by a location and a number of contiguous resource blocks starting from a resource block with a lowest index among the second resource blocks forming the CORESET #0 and ending with a resource block with a highest index among the second resource blocks.

7. The method of claim 1, wherein the CORESET #0 is related to Type0-PDCCH common search space (CSS) set.

8. A method of operating a base station (BS) in a wireless communication system, the method comprising:

   transmitting, to a user equipment (UE), a master information block (MIB) including configuration information related to a total number of contiguous resource blocks for control resource set (CORESET) #0;
   transmitting, to the UE, a physical downlink control channel (PDCCH) related to system information block 1 (SIB1) through the CORESET #0 including second resource blocks excluding first resource blocks from the resource blocks based on i) the total number of the resource blocks and ii) a channel bandwidth,
   wherein a puncturing for a specific number of first resource blocks among the resource blocks is performed; and
   transmitting, to the UE, a physical downlink shared channel (PDSCH) related to the SIB1 via an initial downlink (DL) bandwidth part (BWP) based on the PDCCH,
   wherein based on the puncturing for the first resource blocks, the initial DL BWP is defined by a number of the second resource blocks forming the CORESET #0 and a location of the second resource blocks.

9. The method of claim 8, wherein based on a bandwidth based on the number of the resource blocks exceeding the channel bandwidth, the PDCCH is transmitted through the second resource blocks related to a bandwidth less than the channel bandwidth.

10. The method of claim 8, wherein the first resource blocks are the specific number of resource blocks with a highest resource block index among the resource blocks.

11. The method of claim 8, wherein the total number of the resource blocks is 24, and
wherein the channel bandwidth is 3 MHz or 5 MHz.

12. The method of claim 11, wherein based on the total number of the resource blocks being 24 and the channel bandwidth being 3 MHz, the number of the second resource blocks is 15.

13. The method of claim 8, wherein the initial DL BWP is defined by a location and a number of contiguous resource blocks starting from a resource block with a lowest index among the second resource blocks forming the CORESET #0 and ending with a resource block with a highest index among the second resource blocks.

14. The method of claim 8, wherein the CORESET #0 is related to Type0-PDCCH common search space (CSS) set.

15. A user equipment (UE) in a wireless communication system, the UE comprising:

a transceiver;
at least one processor; and
at least one memory operably connectable to the at least one processor and configured to store instructions performing operations based on being executed by the at least one processor,
wherein the operations comprise all steps of a method according to any one of claims 1 to 7.

16. A base station in a wireless communication system, the base station comprising:

a transceiver;
at least one processor; and
at least one memory operably connectable to the at least one processor and configured to store instructions performing operations based on being executed by the at least one processor,
wherein the operations comprise all steps of a method according to any one of claims 8 to 14.

17. A control device controlling a user equipment in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connected to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

20. One or more non-transitory computer readable mediums storing one or more instructions,

wherein the one or more instructions are configured to perform operations based on being executed by one or more processors, and
wherein the operations comprise all steps of a method according to any one of claims 8 to 14.

【FIG. 1】

INITIAL CELL SEARCH | SYSTEM INFORMATION RECEPTION | RANDOM ACCESS PROCEDURE | GENERAL DL/UL Tx/Rx

PSS-SSS& [DLRS]& PBCH

PDCCH/ PDSCH (BCCH)

PRACH    PDCCH/ PDSCH    PUSCH    PDCCH/ PDSCH

PDCCH/ PDSCH    PUSCH/ PUCCH

S11    S12    S13    S14    S15    S16    S17    S18

· DL/UL ACK/NACK
· UE CQI/PMI RI REPORT USING PUSCH AND PUCCH

【FIG. 2】

Subcarrier number

239
192
182

56
47
0

PSS

PBCH

PBCH

SSS

PBCH

PBCH

PBCH

0    1    2    3
OFDM symbol number

【FIG. 3】

SSB periodicity
(default:20ms)

| 5ms window | | | | |

SSB burst set

| SSB#1 | SSB#2 | · · · | SSB#L |

【FIG. 4】

Power On

↓

PSS/SSS reception

↓

PBCH reception

↓

SIB1-scheduling PDCCH reception

↓

SIB1 PDSCH reception

↓

Ready for PRACH transmission
for initial access

【FIG. 5】

Not transmitted or punctured

PSS

PBCH

SSS

PBCH

PBCH

PBCH

CORESET #0

CORESET #0

CORESET #0

SIB1 PDSCH

Channel BW= initial DL BWP

Not transmitted or punctured

Frequency

Time

【FIG. 6】

【FIG. 7】

```
                    ( Start )
                        |
                        v
  +--------------------------------------------------+
  | Receive, from base station, MIB including        |
  | configuration information related to total       |----S710
  | number of contiguous resource blocks for         |
  | CORESET #0                                        |
  +--------------------------------------------------+
                        |
                        v
  +--------------------------------------------------+
  | Receive, from base station, PDCCH related to     |
  | SIB1 through CORESET #0 including second          |
  | resource blocks excluding first resource blocks  |----S720
  | from resource blocks based on i) total number of |
  | resource blocks and ii) channel bandwidth        |
  +--------------------------------------------------+
                        |
                        v
  +--------------------------------------------------+
  | Receive, from base station, PDSCH related to     |----S730
  | SIB1 based on PDCCH                               |
  +--------------------------------------------------+
                        |
                        v
                    ( End )
```

【FIG. 8】

```
                    ( Start )
                        |
                        v
  +--------------------------------------------------+
  | Transmit, to UE, MIB including configuration     |
  | information related to total number of           |----S810
  | contiguous resource blocks for CORESET #0        |
  +--------------------------------------------------+
                        |
                        v
  +--------------------------------------------------+
  | Transmit, to UE, PDCCH related to SIB1 through   |
  | CORESET #0 including second resource blocks      |
  | excluding first resource blocks from resource    |----S820
  | blocks based on i) total number of resource      |
  | blocks and ii) channel bandwidth                 |
  +--------------------------------------------------+
                        |
                        v
  +--------------------------------------------------+
  | Transmit, to UE, PDSCH related to SIB1 based on  |----S830
  | PDCCH                                            |
  +--------------------------------------------------+
                        |
                        v
                    ( End )
```

【FIG. 9】

## INTERNATIONAL SEARCH REPORT

| | International application No. |
|---|---|
| | **PCT/KR2023/017390** |

**A. CLASSIFICATION OF SUBJECT MATTER**

**H04W 72/23**(2023.01)i; **H04W 72/04**(2009.01)i; **H04W 52/14**(2009.01)i; **H04W 52/32**(2009.01)i

According to International Patent Classification (IPC) or to both national classification and IPC

**B. FIELDS SEARCHED**

Minimum documentation searched (classification system followed by classification symbols)

H04W 72/23(2023.01); H04L 5/00(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CORESET #0(control resource set #0), 인접(contiguous), 자원 블록(resource block), MIB(master information block), SIB1(system information block 1), PDCCH(physical downlink control channel), 펑처링 (puncturing), 초기 DL BWP(initial downlink bandwidthpart, initial downlink BWP), PDSCH(physical downlink shared channel)

**C. DOCUMENTS CONSIDERED TO BE RELEVANT**

| Category* | Citation of document, with indication, where appropriate, of the relevant passages | Relevant to claim No. |
|---|---|---|
| X | NTT DOCOMO, INC. Discussion on potential solutions for further UE complexity reduction for eRedCap. R1-2207416, 3GPP TSG RAN WG1 #110. Toulouse, France. 12 August 2022. See sections 2.1.2 and 2.1.4. | 1-20 |
| A | NTT DOCOMO, INC. Discussion on potential solutions for further UE complexity reduction for eRedCap. R1-2207684, 3GPP TSG RAN WG1 #110. Toulouse, France. 20 August 2022. See sections 1-2.4. | 1-20 |
| A | LG ELECTRONICS. Discussion on potential solutions for further UE complexity reduction. R1-2207036, 3GPP TSG RAN WG1 #110. Toulouse, France. 12 August 2022. See sections 1-2.6. | 1-20 |
| A | US 2020-0396760 A1 (COMCAST CABLE COMMUNICATIONS, LLC) 17 December 2020 (2020-12-17) See paragraphs [0233]-[0563]; and figures 1-35. | 1-20 |
| A | WO 2022-155488 A1 (INTEL CORPORATION) 21 July 2022 (2022-07-21) See page 8, line 24 - page 19, line 15; and figures 1-5. | 1-20 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 February 2024** | **14 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/017390**

| Patent document cited in search report | | | Publication date (day/month/year) | Patent family member(s) | | | Publication date (day/month/year) |
|---|---|---|---|---|---|---|---|
| US | 2020-0396760 | A1 | 17 December 2020 | CA | 3083316 | A1 | 11 December 2020 |
| | | | | EP | 3751776 | A1 | 16 December 2020 |
| WO | 2022-155488 | A1 | 21 July 2022 | None | | | |

Form PCT/ISA/210 (patent family annex) (July 2022)